(19) Europäisches Patentamt
European Patent Office
Office européen des brevets

(11) Numéro de publication: **0 044 767**
**B1**

(12) **FASCICULE DE BREVET EUROPEEN**

(45) Date de publication du fascicule du brevet: **06.04.83**

(51) Int. Cl.³: **C 09 B 45/16,** C 09 B 45/48 // D06P3/04

(21) Numéro de dépôt: **81401084.9**

(22) Date de dépôt: **07.07.81**

(54) **Colorants complexes chromifères, leur procédé de préparation et leur application.**

(30) Priorité: **18.07.80 FR 8015879**

(43) Date de publication de la demande: **27.01.82 Bulletin 82/4**

(45) Mention de la délivrance du brevet: **06.04.83 Bulletin 83/14**

(84) Etats contractants désignés: **BE CH DE FR GB IT LI NL**

(56) Documents cités:
**FR-A-754 639**
**FR-A-1 356 566**
**FR-A-2 271 267**

(73) Titulaire: **P C U K PRODUITS CHIMIQUES UGINE KUHLMANN, Service Propriété Industrielle Tour Manhattan, F-92087 Paris La Défense 2 Cédex 21 (FR)**

(72) Inventeur: **Breda, Antoine Georges Léon Jacques, 15 Parc des Hauts Prés Saint Genis Les Ollieres, F-69290 Craponne (FR)**
Inventeur: **Roussel, Jaques, Lotissement Chevaller, F-27670 Bosc Roger en Roumois (FR)**

(74) Mandataire: **Leboulenger, Jean et al, P C U K PRODUITS CHIMIQUES UGINE KUHLMANN Service Propriéte Industrielle Tour Manhattan, F-92087 Paris La Défense 2 Cedex 21 (FR)**

**EP 0 044 767 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Colorants complexes chromifères, leur procédé de préparation et leur application.

Le présente invention, faite dans les services de la demanderesse, concerne de nouveaux colorants complexes chromifères particulièrement intéressants pour colorer les polyamides naturels ou synthétiques et le cuir.

Dans le brevet français 2 271 267 déposé le 6 Février 1974 (74 03912) sont décrits des colorants complexes chromifères qui, sous la forme acide, peuvent être représentés par la formule générale:

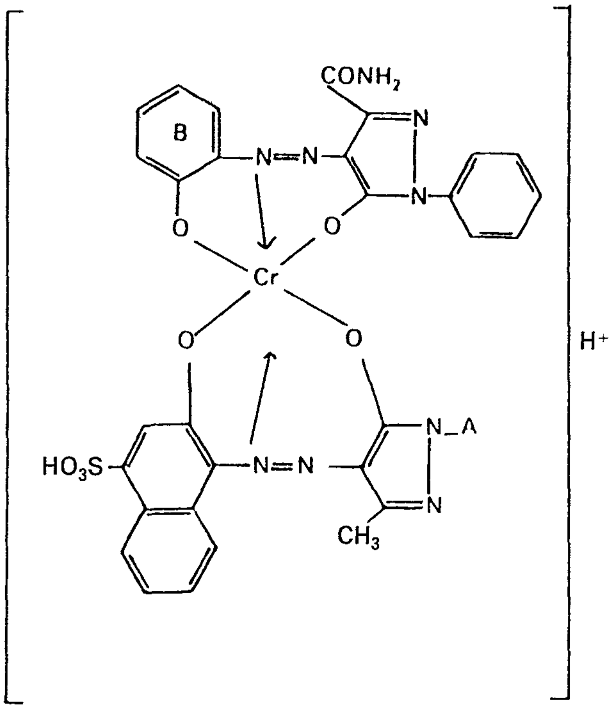
(I)

dans laquelle A représente un atome d'hydrogène ou un groupe phényle éventuellement substitué par un ou plusieurs atomes d'halogène (de préférence un ou deux atomes de chlore) ou groupes alkyle de bas poids moléculaire (de préférence méthyl ou éthyl) et le noyau B peut être substitué par un ou plusieurs atomes de chlore. Pour la préparation de ces complexes on met en œuvre un composé monoazoïque de formule:

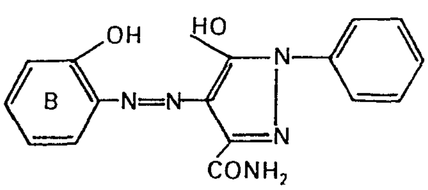
(II)

qui dérive de la phényl-1 carbamoyl-3 pyrazolone-5, copulant généralement préparé par condensation de la phénylhydrazine avec l'oxalacétate de diéthyle, cyclisation en phényl-1 carbéthoxy-3 pyrazolone-5 et amidification subséquente par l'ammoniaque en phényl-1 carbamoyl-3 pyrazolone-5. A l'échelon industriel, cette réaction finale d'amidification s'accompagne toujours d'une hydrolyse partielle de la fonction carbéthoxy en carboxy, de sorte que les colorants ainsi produits contienent toujours, à côté du complexe de formule (I), une proportion variable et non négligeable du complexe de formule:

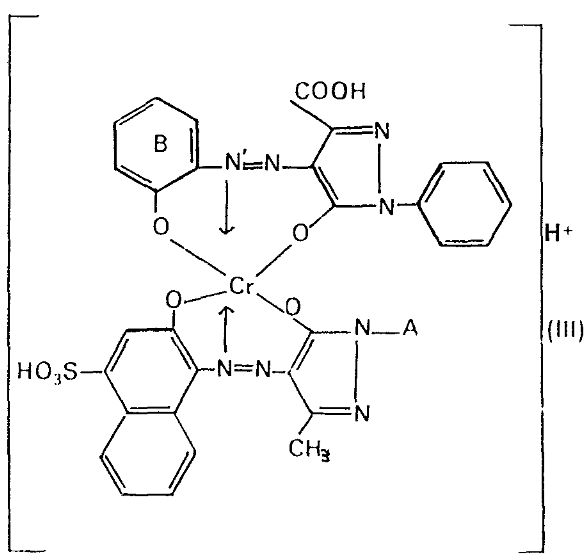
(III)

qui, par rapport au complexe correspondant de formule (I), se révèle hypsochrome et inférieur en solidité lumière et solidités humides.

Pour pallier cet inconvénient, on a tenté de reporter l'amidification à un stade ultérieur de la préparation, soit en effectuant l'amidification d'un composé monoazoïque de formule:

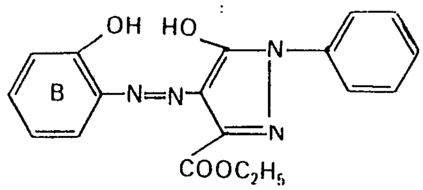

(IV)

pour obtenir ainsi le composé monoazoïque de formule (II) correspondant, soit en effectuant l'amidification d'un complexe de formule:

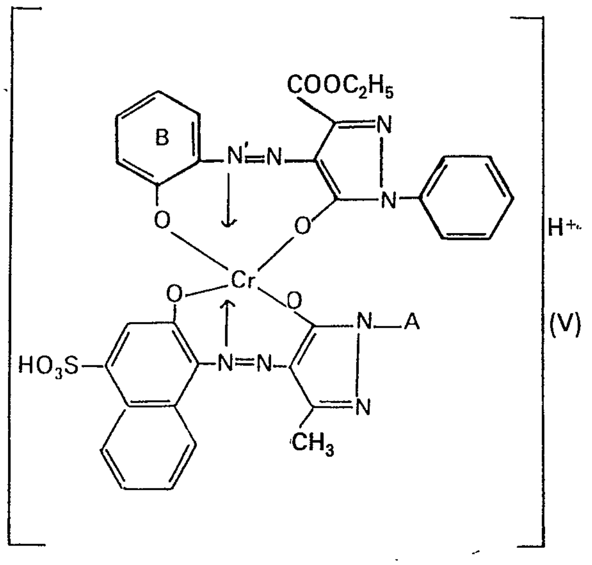

(V)

pour obtenir le colorant de formule (I) correspondant. Cependant, l'amidification par l'ammoniaque effectuée à ces stades s'accompagne également de la formation des dérivés carboxylés correspondants.

Il a maintenant été trouvé de façon tout-à-fait surprenante que, lorsqu'on remplace l'ammoniaque par la mono- ou di-éthanolamine, l'amidification, quelque soit le stade auquel elle est effectuée, conduit industriellement à des colorants qui ne contiennent pas ou très peu de colorants carboxylés et présentent de ce fait d'excellentes propriétés coloristiques.

La présente invention a donc pour objet les nouveaux colorants complexes chromifères ainsi obtenus qui, sous la forme acide, peuvent être représentés par la formule générale:

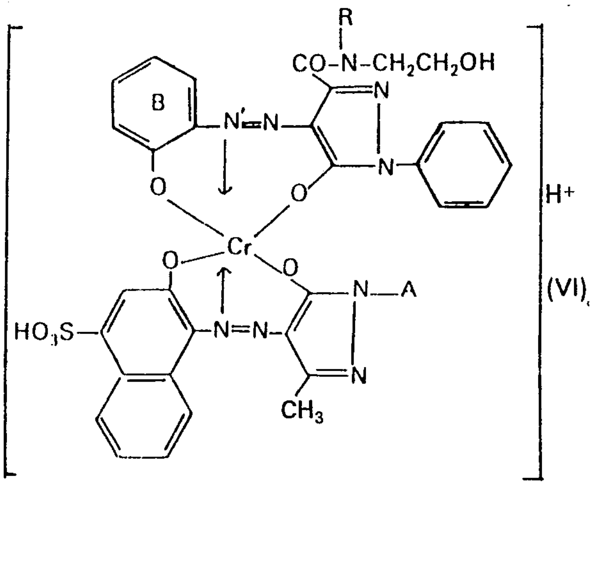

(VI),

dans laquelle A et B ont les mêmes significations que ci-dessus et R représente un atome d'hydrogène ou un groupe β-hydroxyéthyle.

L'invention a également pour objet un procédé de préparation des colorants de formule (VI) qui consiste, dans la suite d'opérations bien connues pour la fabrication de complexes de ce type, à amidifier par la mono- ou di-éthanolamine un précurseur carbéthoxylé des complexes (VI), ce précurseur pouvant être la phényl-1 carbéthoxy-3 pyrazolone-5, un composé monoazoïque de formule (IV) ou un complexe de formule (V). Ainsi, selon le stade auquel est effectuée l'amidification par la mono- ou di-éthanolamine, les colorants selon l'invention de formule (VI) peuvent être préparés selon l'une ou l'autre des méthodes suivantes:

1. Une première méthode consiste à amidifier la phényl-1 carbéthoxy-3 pyrazolone-5 par la mono- ou di-éthanolamine, à copuler ensuite la phényl-1 N-(β-hydroxyéthyl) ou N,N-bis (β-hydroxyéthyl) carbamoyl-3 pyrazolone-5 ainsi obtenue avec l'o-aminophénol ou un dérivé chloré de celui-ci, puis à faire réagir en proportions sensiblement équimolaires le composé monoazoïque ainsi obtenu de formule:

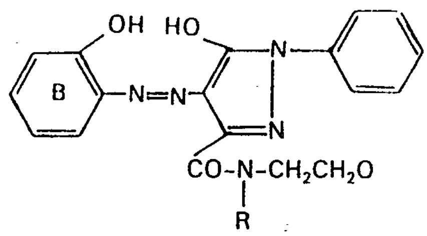

(VII)

sur le complexe chromifère 1/1 d'un composé monoazoïque de formule:

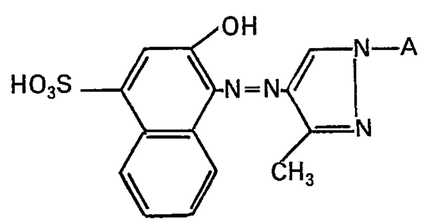

(VIII)

ou, inversement, à faire réagir le complexe chromifère 1/1 d'un composé monoazoïque de formule (VII) sur un composé monoazoïque de formule (VIII).

2. Une seconde méthode consiste à amidifier par la mono- ou diéthanolamine un composé monoazoïque de formule (IV), puis, comme dans la méthode précédente, à faire réagir le composé monoazoïque de formule (VII) ainsi obtenu ou son complexe chromifère 1/1 sur un composé monoazoïque de formule (VIII) à l'état de complexe chromifère 1/1 ou non, respectivement.

3. Une troisième méthode consiste à préparer de façon connue en soi un complexe de formule (V) à partir des composés monoazoïques de formules (IV) et (VIII), puis à amidifier ce complexe au moyen de mono- ou diéthanolamine. Ceci

peut être éventuellement réalisé en une seule étape en effectuant la condensation du composé monoazoïque (IV) et du complexe chromifère 1/1 du composé monoazoïque (VIII) en présence de mono- ou diéthanolamine.

Les opérations de copulation pour la formation des composés monoazoïques de formule (VII) ou de condensation pour la formation des complexes 1/2 de formules (V) et (VIII) s'effectuent suivant les méthodes habituelles bien connues.

L'amidification peut être effectuée entre 20 et 100°C, de préférence entre 80 et 90°C, en ajoutant à une pâte de presse aqueuse du précurseur carbéthoxylé 3 à 12 moles de mono- ou diéthanolamine par mole de précurseur.

Un mode de réalisation préféré selon la première méthode consiste à former et à amidifier la phényl-1 carbéthoxy-3 pyrazolone-5 en un seul stade. A cet effet, on chauffe à une température ne dépassant pas 85°C, de préférence 80°C, une pâte aqueuse de phénylhydrazone d'oxalacétate de diéthyle jusqu'à la fusion totale de l'hydrazone, puis on élimine la phase aqueuse et traite l'hydrazone anhydre restante avec 3 à 12 équivalents-molaires de mono- ou diéthanolamine.

Appliqués sur fibres de polyamides naturels (laine) ou synthétiques et sur cuir suivant les procédés connus de teinture ou d'impression, les nouveaux colorants de formule (VI) et leurs sels fournissent des colorations de nuance bordeaux avec de très bonnes solidités à la lumière et au lavage. La reproductibilité de leur nuance et de leurs solidités est supérieure à celle des colorants de formule (I).

Les colorants selon l'invention présentent également la particularité de ne pas sublimer et de conserver intégralement leur rendement tinctorial et leur nuance, même après une exposition de 45 minutes à une température de 290 à 300°C. Cette propriété est conservée même si le séjour à haute température se fait dans des polyamides en fusion tels que les polyamides 6, 6-6 et 11 qui sont les plus couramment utilisés pour obtenir des fils ou filaments textiles, ainsi que des crins, feuilles ou objets moulés ou extrudés. Cette particularité des complexes selon l'invention permet de les utiliser pour la coloration et pour la teinture dans la masse des polyamides synthétiques.

Les exemples suivants, dans lesquels les parties et pourcentages indiqués s'entendent en poids sauf mention contraire, illustrent l'invention sans la limiter.

## Exemple 1

a) Préparation de la phényl-1 N-(β-hydroxyéthyl) carbamoyl-3 pyrazolone-5

Dans un réacteur en acier vitrifié d'une contenance de 7000 parties en volume, on charge 1000 parties d'eau, puis 4000 parties d'une pâte aqueuse de phénylhydrazone d'oxalacétate de diéthyle, contenant environ 44% de matières sèches et 1347 parties d'hydrazone pure. On ajoute ensuite 750 parties de chlorure de sodium pour régler la densité de la phase aqueuse à environ 1,18, chauffe le mélange à 80°C jusqu'à fusion totale de l'hydrazone surnageante, puis élimine la phase aqueuse salée. Dans l'hydrazone anhydre restante, maintenue entre 70 et 80°C, on coule 1050 parties de mono-éthanolamine; la réaction étant exothermique, l'introduction de monoéthanolamine est réglée de telle sorte que la température reste inférieure à 85°C. Lorsque l'introduction de monoéthanolamine est terminée, on chauffe progressivement, tout en distillant l'alcool éthylique formé; la température de la masse réactionnelle en fin de distillation ne doit pas dépasser 110°C.

On obtient ainsi 2280 parties d'un liquide visqueux contenant 1185 parties de phényl-1 N-(β-hydroxyéthyl) carbamoyl-3 pyrazolone-5. Ce liquide visqueux peut être éventuellement dilué à l'eau et est directement utilisable dans l'étape ultérieure.

b) Préparation du (chloro-5 hydroxy-2 phénylazo)-4 N-(β-hydroxyéthyl) carbamoyl-3 hydroxy-5 phényl-1 pyrazole

Dans 1000 parties d'eau on empâte 143,5 parties de chloro-4 amino-2 phénol, puis ajoute 220 parties d'acide chlorhydrique de densité 1,08 et amène la température entre 0 et 5°C par addition de glace. On diazote ensuite à l'aide de 138 parties d'une solution aqueuse à 50% de nitrite de sodium.

D'autre part, dans un autre réacteur, on charge 475 parties du liquide visqueux obtenu précédemment (soit 247 parties de phényl-1 N-(β-hydroxyéthyl) carbamoyl-3 pyrazolone-5 pure), puis porte le volume à 2000 parties avec de l'eau et ajuste le pH à 6 par addition d'acide acétique. On chauffe le mélange à 35°C, puis y introduit en 4 heures la suspension diazoïque obtenue comme indiqué ci-dessus, tout en maintenant la température à 35°C et le pH entre 6 et 7. Le composé monoazoïque précipite; on le filtre et le lave sur filtre avec de l'eau. On obtient ainsi 1000 parties d'une pâte contenant environ 373 parties de (chloro-5 hydroxy-2 phénylazo)-4 N-(β-hydroxyéthyl) carbamoyl-3 hydroxy-5 phényl-1 pyrazole pur.

c) Préparation du complexe selon l'invention

Dans 500 parties d'eau on délaye 107,6 parties de la pâte obtenue ci-dessus (correspondant à 40,15 parties de monoazoïque pur), puis on ajoute 66 parties d'une pâte du complexe de chrome 1/1 do composé [hydroxy-2 sulfo-4 naphtalène]-<1 azo 4>-[hydroxy-5 méthyl-3 phényl-1 pyrazole] contenant 55 parties de complexe 1/1 pur. On chauffe à une température comprise entre 85 et 95°C et maintient le pH au voisinage de 7 par introduction simultanée d'une solution aqueuse d'hydroxyde de sodium de densité 1,25. La condensation est réalisée en une heure environ. On refroidit jusqu'à 70°C, ajoute 65 parties de chlorure de sodium et filtre.

On obtient ainsi 185 parties d'une pâte contenant 83 parties du sel de sodium du complexe de formule:

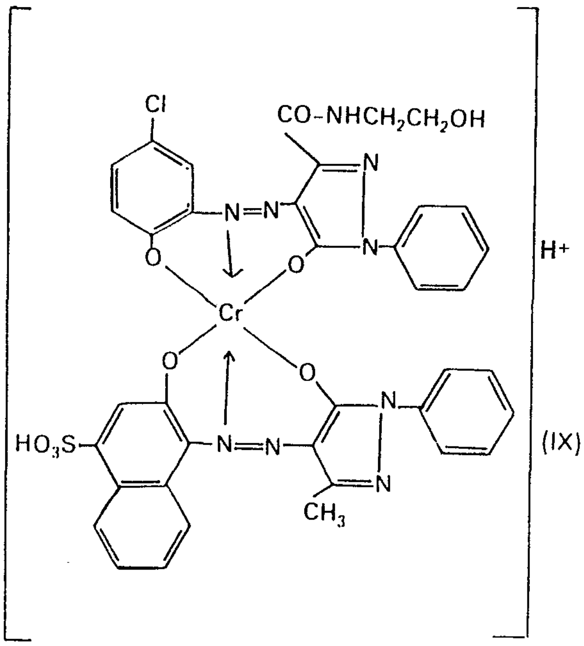

(IX)

pratiquement exempte de dérivé carboxylé.

Appliqué sur laine, nylon et cuir, ce complexe conduit à des nuances bordeaux bien reproductibles et d'excellentes solidités à la lumière et au lavage. En coloration masse des polyamides synthétiques, ce complexe présente une solidité thermique particulièrement bonne.

Exemple 2

On dissout 232 parties de phényl-1 carbéthoxy-3 pyrazolone-5 dans 1500 parties d'eau à l'aide de 130 parties de carbonate de sodium. On chauffe le mélange à 40°C, puis y coule une suspension diazoïque préparée comme à l'exemple 1-b (premier paragraphe) à partir de 143,5 parties de chloro-4 amino-2 phénol. Le précipité est filtré et lavé sur filtre avec de l'eau. On obtient 900 parties d'une pâte contenant environ 329 parties de (chloro-5 hydroxy-2 phénylazo)-4 carbéthoxy-3 hydrody-5 phényl-1 pyrazole.

On ajoute ces 900 parties de pâte à 650 parties de monoéthanolamine et chauffe à 85°C pendant environ 2 heures jusqu'à fin de réaction (contrôle par chromatographie). La masse obtenue qui contient environ 340 parties de (chloro-5 hydroxy-2 phénylazo)-4 N-(β-hydroxyéthyl) carbamoyl-3 hydroxy-5 phényl-1 pyrazole et très peu du dérivé carboxy-3 correspondant, est utilisable telle quelle pour la préparation de complexes selon l'invention, par exemple en opérant comme à l'exemple 1-c.

La masse peut être pratiquement exempte de dérivé carboxy-3 si, au lieu des 900 parties de pâte de (chloro-5 hydroxy-2 phénylazo)- 4 carbéthoxy-3 hydroxy-5 phényl-1 pyrazole, on utilisece monoazoïque sec pour l'opération ultérieure.

Exemple 3

1058 parties d'une pâte obtenue comme au premier paragraphe de l'exemple 2 et contenant 386,5 parties du monoazoïque (chloro-5 hydroxy-2 phénylazo)-4 carbéthoxy-3 hydroxy-5 phényl-1 pyrazole pur sont empâtées dans un mélange de 650 parties de monoéthanolamine et 480 parties d'eau. On ajoute ensuite 660 parties du complexe de chrome 1/1 du composé [hydroxy-2 sulfo-4 naphtalène]-‹1 azo 4-›-[hydroxy-5 méthyl-3 phényl-1 pyrazole] contenant 550 parties de complexe 1/1 pur, puis chauffe à 85°C jusqu'à fin de réaction, soit environ une heure. On précipite le complexe de formule (IX) en coulant 6500 parties d'eau salée à 18% dans la masse réactionnelle. Après filtration et essorage, on obtient 1850 parties d'une pâte contenant 830 parties de colorant dont les chromatographies démontrent qu'il ne contient que très peu de complexe carboxylé.

Exemple 4

Dans 5000 parties d'eau on délaye 1058 parties d'une pâte obtenue comme au premier paragraphe de l'exemple 2 et contenant 386,5 parties du monoazoïque (chloro-5 hydroxy-2 phénylazo)-4 carbéthoxy-3 hydroxy-5 phényl-1 pyrazole pur, ainsi que 660 parties de pâte du complexe de chrome 1/1 du composé [hydroxy-2 sulfo-4 naphtalène]-(1 azo 4)-[hydroxy-5 méthyl-3 phényl-1 pyrazole] contenant 550 parties de complexe 1/1 pur. On chauffe ensuite entre 85 et 100°C pendant deux heures, tout en maintenant le pH à environ 7 par addition de 800 parties d'une solution aqueuse à 10% d'hydroxyde de sodium. On ajoute progressivement du sel à raison de 10% par rapport au volume pour précipiter le complexe carbéthoxylé de formule:

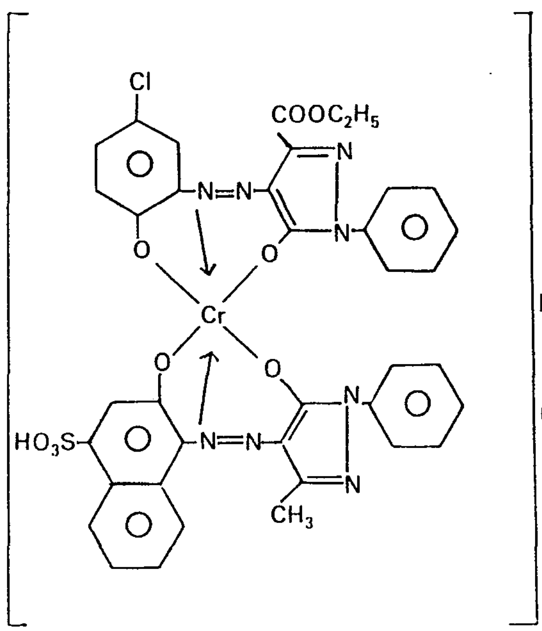

(X)

qu'on filtre et réempâte dans 650 parties de monoéthanolamine préalablement amenées à 85°C. On maintient à cette température jusqu'à transformation complète du groupe carbéthoxy en groupe N-(β-hydroxyéthyl) carbamoyle, soit pendant une heure environ. On dilue ensuite la masse réactionnelle avec 6500 parties d'eau salée à 18%. Après filtration et essorage, on obtient 1850

parties d'une pâte contenant 830 parties de complexe de formule (IX) pratiquement pur.

Exemple 5

En opérant comme à l'exemple 1 ou 2, mais en remplaçant le chloro-4 amino-2 phénol par 178 parties de dichloro-4,6 amino-2 phénol, on obtient un colorant possèdant des propriétés semblables.

Exemple 6

Dans un récipient cylindrique tournant sur son axe on mélange pendant une heure 100 parties de polyamide 6-6 (polyadipate d'hexaméthylènediamine) et 0,5 partie (poids sec) du colorant obtenu à l'exemple 1. Le mélange est ensuite introduit dans une extrudeuse à vis dont la filière est portée à 285°C. A la sortie de l'extrudeuse, le mélange est refroidi puis transformé en grains d'environ 2 mm de côté. On sèche les grains, puis les introduit dans un appareil de filature où le mélange en fusion est soumis à une pression constante sur une grille de fusion à 290°C avant de passer sur un lit filtrant à base de sable de rivière lavé et grillé dont les grains ont une dimension de l'ordre de 0,03 mm, puis au travers d'une filière comportant sept orifices de 0,23 mm de diamètre. Le réglage de l'appareil est effectué de telle sorte qu'après un étirage ultérieur de coefficient 4 les sept filaments aient chacun un titre de 17 décitex. On obtient ainsi des filaments de polyamide 6-6 colorés en une nuance bordeaux très solide.

Exemple 7

On empâte 1,5 partie (poids sec) du colorant obtenu à l'exemple 1 dans 7,5 parties d'eau déminéralisée à 40°C. On introduit le mélange dans un appareil de teinture pouvant fonctionner sous pression et contenant déjà 1000 parties d'eau déminéralisée amenée à pH 5 par addition d'acide acétique. On ajoute alors 300 parties de polyamide 6 sous forme de petits granulés d'environ 2 mm de côté, porte la température jusqu'à 103°C environ en l'espace de 30 minutes et maintient cette température pendant une heure et demie sous agitation. Les granulés teints en bordeaux sont ensuite lavés à l'eau déminéralisée et séchés. En opérant dans les conditions de l'exemple 6, ils peuvent ensuite être transformés en filaments de nuance bordeaux très solide.

**Revendications**

1. Les colorants complexes chromifères qui, sous la forme acide, répondent à la formule générale:

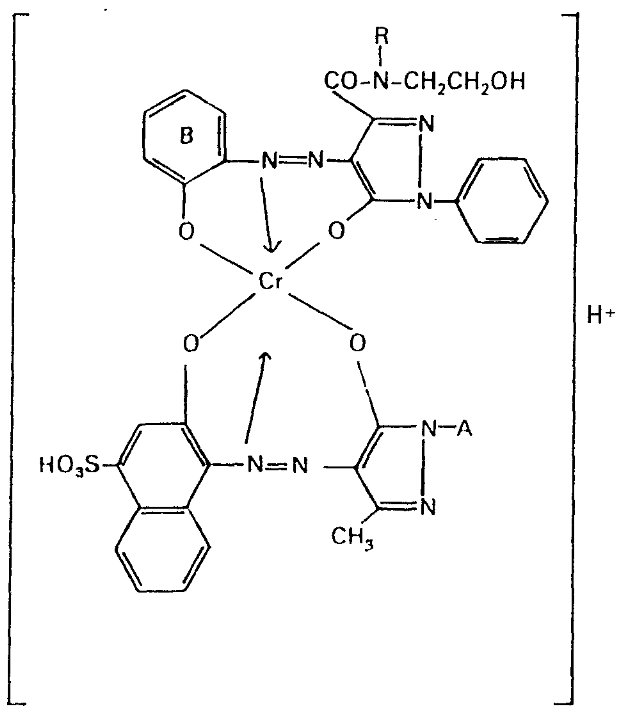

(VI)

dans laquelle R représente un atome d'hydrogène ou un groupe β-hydroxyéthyle, A représente un atome d'hydrogène ou un groupe phényle éventuellement substitué par un ou plusieurs atomes d'halogène ou groupes alkyle de bas poids moléculaire, et le noyau B peut être substitué par un ou plusieurs atomes de chlore.

2. Colorant complexe chromifère selon la revendication 1 qui, sous la forme acide, répond à la formule:

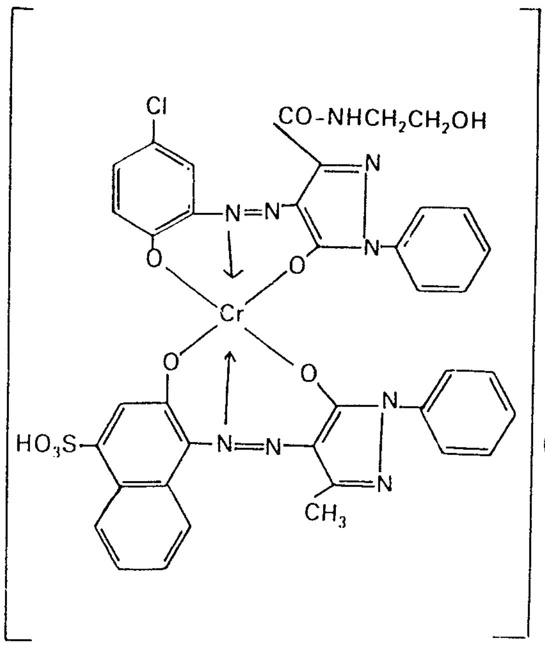

H·

(IX)

3. Procédé pour la préparation des colorants selon la revendication 1, caractérisé en ce que l'on amidifie par la mono- ou diéthanolamine un précurseur carbéthoxylé des complexes de formule (VI), ce précurseur étant la phényl-1 carbéthoxy-3 pyrazolone-5, un composé monoazoïque de formule:

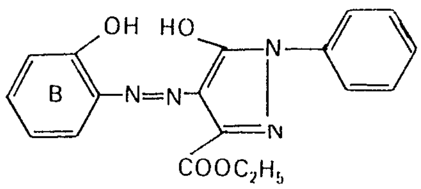

(IV)

ou un complexe de formule:

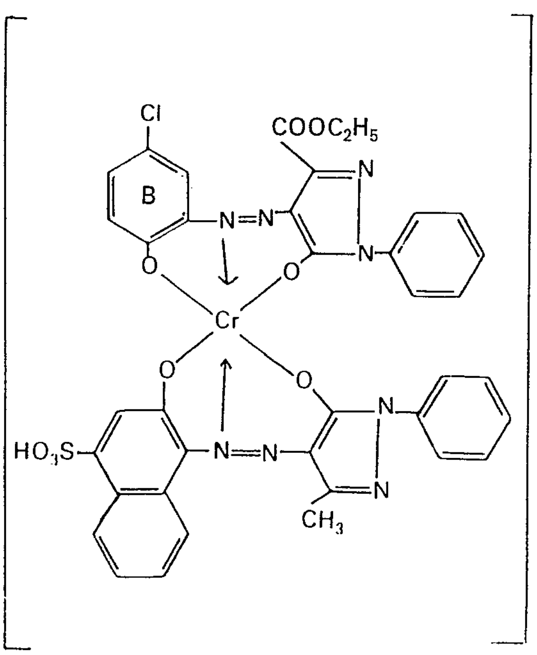

H+

(V)

formules dans lesquelles A et B ont les mêmes significations que dans la revendication 1.

4. Procédé selon la revendication 3 caractérisé en ce que l'on utilise 3 à 12 moles de mono- ou diéthanolamine par mole de précurseur.

5. Procédé selon la revendication 3 ou 4 caractérisé en ce que la phényl-1 carbéthoxy-3 pyrazolone-5 est formée et amidifiée en un seul stade.

6. L'application des complexes chromifères selon la revendication 1 ou 2 à la coloration des polyamides naturels ou synthétiques ou du cuir.

7. Les matières et articles colorés au moyen d'un complexe chromifère selon la revendication 1 ou 2.

**Patentansprüche**

1. Chromkomplexfarbstoffe, die in der Säureform der allgemeinen Formel

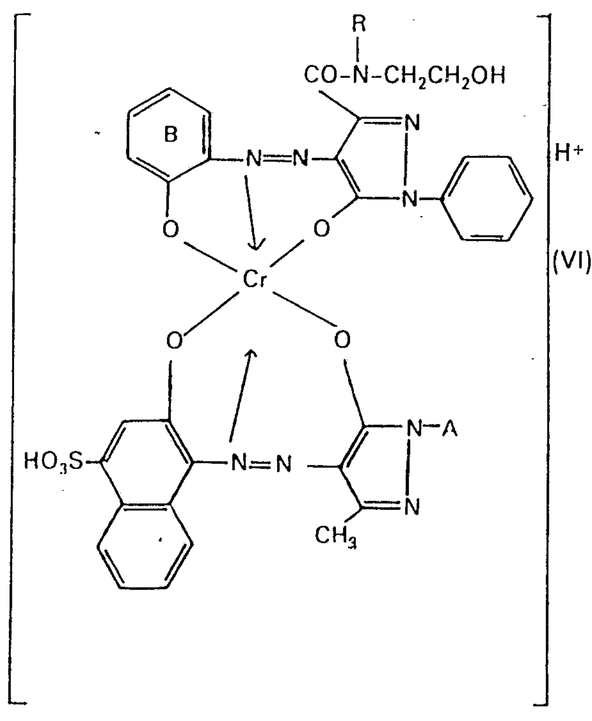

H+

(VI)

entsprechen, in der R ein Wasserstoffatom oder eine β-Hydroxyäthylgruppe und A ein Wasserstoffatom oder eine gegebenenfalls durch ein oder mehrere Halogenatome oder niedrigmolekulare Alkylgruppen substituierte Phenylgruppe bedeuten und der Kern B durch ein oder mehrere Halogenatome substituiert sein kann.

2. Chromkomplexfarbstoff nach Anspruch 1, der in der Säureform der Formel

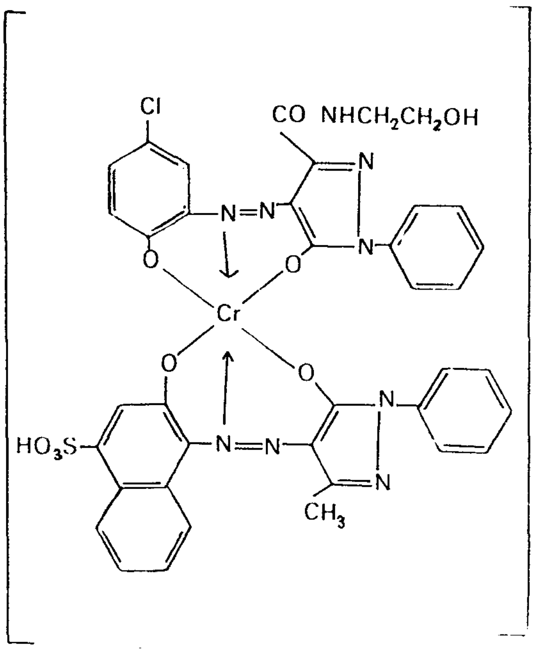

(IX)

entspricht.

3. Verfahren zur Herstellung der Farbstoffe nach Anspruch 1, dadurch gekennzeichnet, dass man einen carbäthoxylierten Vorläufer der Komplexe der Formel VI, bei dem es sich um 1-Phenyl-3-carbäthoxy-5-pyrazolon, eine Monoazoverbindung der Formel

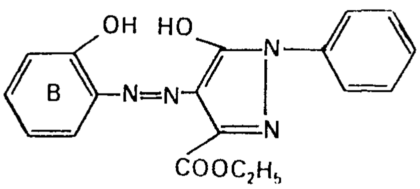

(IV)

oder einen Komplex der Formel

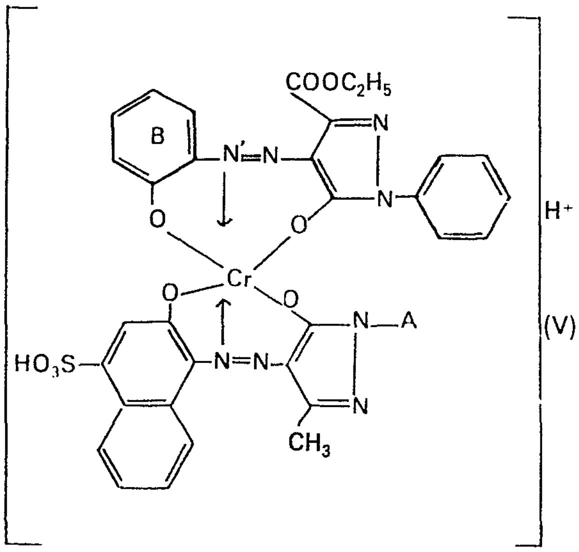

(V)

in welchen Formeln A und B die in Anspruch 1 angegebenen Bedeutungen besitzen, handelt, mit Mono- oder Diäthanolamin amidiert.

4. Verfahren nach Anspruch 3, dadurch gekennzeichnet, dass man 3 bis 12 Mol Mono- oder Diäthanolamin pro Mol des Vorläufers verwendet.

5. Verfahren nach Anspruch 3 oder 4, dadurch gekennzeichnet, dass man 1-Phenyl-3-carbäthoxy-5-pyrazolon in einer einzigen Stufe bildet und amidiert.

6. Verwendung der Chromkomplexe nach Anspruch 1 oder 2 zum Färben von natürlichen oder synthetischen Polyamiden oder Leder.

7. Materialien oder Gegenstände, die mit Hilfe eines Chromkomplexes nach Anspruch 1 oder 2 gefärbt sind.

## Claims

1. Chromium-complex dyestuffs which, in the acid form, correspond to the general formula:

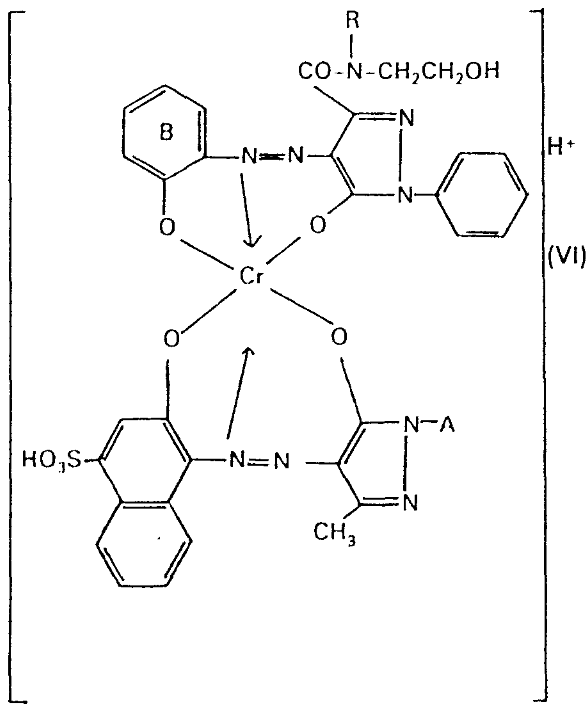

(VI)

in which R represents a hydrogen atom or a β-hydroxyethyl group, A represents a hydrogen atom or a phenyl group possibly substituted by one or more halogen atoms or alkyl groups of low molecular weight, and the nucleus B may be substituted by one or more chlorine atoms.

2. Chromium-complex dyestuff according to claim 1 which, in the acid form, corresponds to the formula:

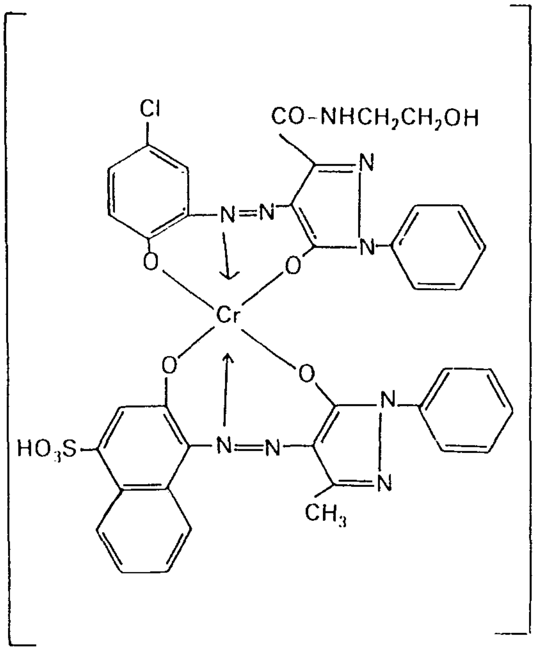

(IX)

3. Process for the preparation of the dyestuffs according to claim 1, characterized in that a carbethoxyl precursor of the complexes of formula (VI) is amidified by mono- or diethanolamine, said precursor being 1-phenyl-3-carbethoxy-pyrazol-5-one, a monoazo compound of the formula:

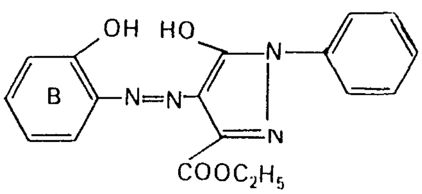

(IV)

or a complex of the formula:

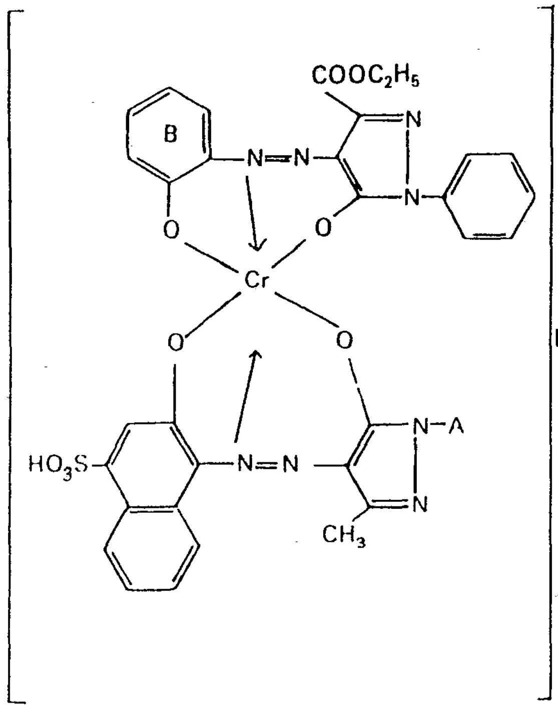

(V)

in which formulas A and B have the same significances as in claim 1.

4. Process according to claim 3, characterized in that 3 to 12 moles of mono- or diethanolamine are used per mole of precursor.

5. Process according to claim 3 or 4, characterized in that 1-phenyl-3-carbethoxy-pyrazol-5-one is formed and amidified in a single stage.

6. The application of the chromium-complexes according to claim 1 or 2 for the colouration of natural or synthetic polyamides or leather.

7. Materials and articles coloured by means of a chromium-complex acording to claim 1 or 2.